# DEMANDE DE BREVET EUROPEEN

(11) **EP 1 602 571 A1**
(43) Date de publication de la demande: **07.12.2005**
(21) Numéro de dépôt: 04447137.3
(22) Date de dépôt: 04.06.2004
(51) Int. Cl.: B62K 25/30

(54) **Bicyclette a suspension intégrale**

(71) Demandeur: Quiven Costas, Juan, 4040 Herstal (BE)
(72) Inventeur: Quiven Costas, Juan, 4040 Herstal (BE)
(74) Mandataire: Van Malderen, Michel

(57) **Abrégé**

La présente invention se rapporte à un véhicule à deux roues, de préférence bicyclette de type VTT ou "mountain bike", comprenant un tube de pédalier (1) essentiellement cylindrique, solidaire d'un cadre rigide (7,8) et contenant un boîtier de roulement de pédalier (4), ainsi qu'un bras oscillant (2) pour le débattement, connecté de manière rigide d'une part au moyeu de la roue arrière et d'autre part, via un dispositif amortisseur (9) à un tube du cadre (7,8), ledit bras oscillant (2) étant également monté pivotant par rapport au cadre (7,8), caractérisé en ce que le bras oscillant (2) est pourvu à l'avant d'une bride (21) s'articulant sur le boîtier de roulement du pédalier (4), au travers d'une ouverture (11) pratiquée à l'arrière du tube de pédalier (1).

## Description

### Objet de l'invention

La présente invention se rapporte à une bicyclette, en particulier de type vélo tout-terrain, appelé communément VTT ou "mountain bike", présentant un nouveau type de suspension arrière.

### Arrière-plan technologique et état de la technique

A l'heure actuelle, la plupart des vélos spécialement adaptés pour la balade ou la randonnée tout-terrain sont équipés d'une fourche à suspension et d'une suspension arrière. On parle de "tout-suspendu" ou de "suspension intégrale".

La suspension arrière a pour but d'absorber les chocs et de contrecarrer les oscillations résultant des forces appliquées principalement à la roue arrière.

Une suspension arrière à pivot permet à l'axe de la roue arrière de décrire un arc de cercle. Le débattement, qui est une caractéristique importante dans les fiches de spécifications des marchands de cycles, est la différence de hauteur entre le niveau le plus haut et le niveau le plus bas de cet axe.

Généralement une telle suspension comprend un amortisseur couplé à un ressort hélicoïdal. L'amortisseur est une cartouche à laminage d'huile, à air ou encore un élastomère.

L'amortisseur est fixé de manière rigide par une extrémité avant soit sur le tube de selle, qui va du pédalier vers la selle, soit sur le tube supérieur, qui va de la selle vers la potence, soit encore sur le tube diagonal, qui va du pédalier vers la potence. De multiples variantes existent, en fonction de l'agencement plus ou moins complexe des tubes du cadre.

L'amortisseur est fixé de manière rigide par une extrémité arrière, directement ou non, aux deux haubans, qui sont les barres se connectant au moyeu arrière. Ce dernier est par ailleurs connecté au pédalier par deux tubes appelés bases. Bien entendu, la connexion des haubans et des bases au moyeu arrière est rigide, ces éléments constituant le bras oscillant. Par contre, les bases sont généralement montées pivotantes au voisinage du pédalier pour permettre le débattement et la réalisation de la fonction d'amortissement, encore appelée "pompage". Chaque paire base-hauban peut être remplacée par un triangle rigide, dit triangle arrière (voir par exemple US-A-5,121,937, US-A-5,269,552, US-A-5,295,702, WO-A-99/65760, WO-A-03/010042, etc.).

On connaît dans l'état de la technique, et même commercialement, sur le marché du VTT, un grand nombre de solutions mono- ou multipivots de ce type.

Les premières suspensions intégrales présentaient un "triangle arrière unifié", où le pédalier est solidaire du bras oscillant, fixé au cadre par un pivot unique. L'intérêt est de garder une tension de chaîne constante. Par contre, la distance selle-pédalier varie et les chocs sont transmis aux jambes.

On connaît également la solution populaire et fiable à triangle arrière articulé et à pivot unique. Ici, le pédalier est solidaire du cadre et donc isolé du bras oscillant. La distance selle-pédalier est constante. En général, les fabricants décalent le pivot en avant ou au-dessus du pédalier, selon que l'on recherche plus de débattement ou moins de pompage. Cependant, l'amortisseur est beaucoup sollicité car il participe directement à la rigidité. La tension de chaîne n'est pas constante.

On peut isoler l'amortisseur du bras oscillant en incorporant un pivot supplémentaire et une biellette appelée "Horst Link" (brevet US-A-5,899,480, de Horst Leitner). On a alors une suspension dite "à parallélogramme déformable" ou à pivots multiples l'amortisseur ne subit plus toute la torsion du fait que la biellette participe à la rigidité. La ligne de chaîne varie moins en fonction du débattement. La présence de nombreux pivots induit l'apparition de jeu, ce qui oblige les fabricants à remplacer les simples bagues par des roulements annulaires.

Les inconvénients de la suspension arrière conventionnelle sont entre autres sa complexité cinématique et partant sa fragilité mécanique, sa sensibilité au pédalage et au freinage ainsi que la sensation de pompage. Le pompage sur un vélo tout-suspendu se caractérise par une perte d'énergie avec comme contrainte de voir le vélo s'enfoncer en fonction de la force de pédalage. Lorsque la suspension est conçue pour n'avoir aucun effet sur la force de pédalage ou pour que le pédalage et le freinage n'aient à l'inverse aucun effet sur la suspension, on parle de "fully-active suspension".

Pour contrecarrer le pompage, on a notamment conçu des systèmes utilisant le principe d'un pivot virtuel, donc variable. Le pivot est situé sur un excentrique circulaire à côté du boîtier de pédalier. Les logements du boîtier de pédalier et de l'excentrique peuvent être intégrés dans une pièce monobloc (par exemple système "NEUF" de Decathlon). Dans le système "i-drive" de GT (brevet US-A-6,073,950 et suivants de Busby), le pédalier est isolé de la suspension en étant inséré dans un boîtier rotatif (excentrique). Cet excentrique est lié au cadre par une petite biellette (appelée "dog bone") qui maintient l'axe du pédalier dans la même position par rapport aux axes, quel que soit le mouvement de la suspension. L'axe selle-pédalier est fixe et la ligne de chaîne est presque constante.

En résumé, les systèmes de suspension connus présentent souvent l'inconvénient de complexité résultant d'un grand nombre de pièces mécaniques telles que pivots, bagues de friction, excentriques, rondelles, leviers, biellettes, etc., ce qui est dommageable au niveau de l'encombrement, du poids total de la bicyclette et parfois de sa rigidité. Cette complexité engendre également une maintenance accrue.

De plus, le rayon effectué par les deux bases de suspension lors de leur rotation peut varier, ce qui est susceptible de modifier la tension dans la chaîne de transmission.

Enfin, on peut ressentir le déplacement du pédalier par rapport aux bases ainsi que des vibrations au niveau du pédalier.

### Buts de l'invention

La présente invention vise à fournir une solution qui permette de s'affranchir des inconvénients de l'état de la technique.

En particulier, l'invention a pour but de simplifier la cinématique de suspension arrière.

L'invention a encore pour but de réduire le poids et d'augmenter la rigidité du vélo.

L'invention a aussi comme but de maintenir approximativement constante la tension dans la chaîne de transmission.

Enfin, l'invention a encore pour but de supprimer ou au moins réduire l'effet de pompage ou d'écrasement lors de l'effort de pédalage.

### Principaux éléments caractéristiques de l'invention

La présente invention se rapporte à un véhicule à deux roues, de préférence bicyclette de type VTT ou "mountain bike", comprenant un tube de pédalier essentiellement cylindrique, solidaire d'un cadre rigide et contenant un boîtier de roulement de pédalier, ainsi qu'un bras oscillant pour le débattement, connecté de manière rigide d'une part au moyeu de la roue arrière et d'autre part, via un dispositif amortisseur à un tube du cadre, ledit bras oscillant étant également monté pivotant par rapport au cadre, caractérisé en ce que le bras oscillant est pourvu à l'avant d'une bride s'articulant sur le boîtier de roulement de pédalier, au travers d'une ouverture pratiquée à l'arrière du tube de pédalier.

Selon une forme d'exécution préférée de l'invention, le bras oscillant arrière s'articule sur le boîtier de roulement du pédalier par l'intermédiaire d'un roulement supplémentaire capable de supporter une charge axiale élevée.

Avantageusement, le roulement supplémentaire est disposé de chaque côté latéral de la bride et s'appuie axialement sur un écrou de blocage du roulement de pédalier.

De préférence, le roulement supplémentaire est du type à rouleaux coniques.

Encore avantageusement, selon l'invention, une rondelle élastique de rattrapage de jeu, par exemple de type Belleville ou ondulée, est disposée axialement entre ledit roulement à rouleaux coniques et ladite bride.

Toujours selon l'invention, le contact entre la bride et le roulement de pédalier est assuré par l'intermédiaire d'une bague de friction.

Selon une première modalité pratique de réalisation, une première extrémité du dispositif amortisseur est fixée de manière rigide au tube diagonal du cadre et l'autre extrémité est fixée de manière pivotante aux haubans du bras oscillant passant de chaque côté du tube de selle.

Selon une deuxième modalité pratique de réalisation, une première extrémité du dispositif amortisseur est fixée de manière rigide au tube de selle.

De préférence, le dispositif amortisseur comprend un amortisseur à gaz, à huile ou un élastomère, ainsi qu'un ressort hélicoïdal.

Toujours avantageusement, le bras oscillant arrière a essentiellement la forme d'un triangle.

### Brève description des figures

La figure 1 représente schématiquement une vue éclatée de la suspension arrière pour bicyclette selon la présente invention.

La figure 2 représente schématiquement des vues en coupe du boîtier de pédalier selon l'invention.

La figure 3 représente schématiquement des vues en coupe du bras oscillant coopérant avec le boîtier de pédalier de la figure 2.

La figure 4 représente une vue en coupe d'une forme d'exécution préférée de l'invention.

### Description d'une forme d'exécution préférée de l'invention

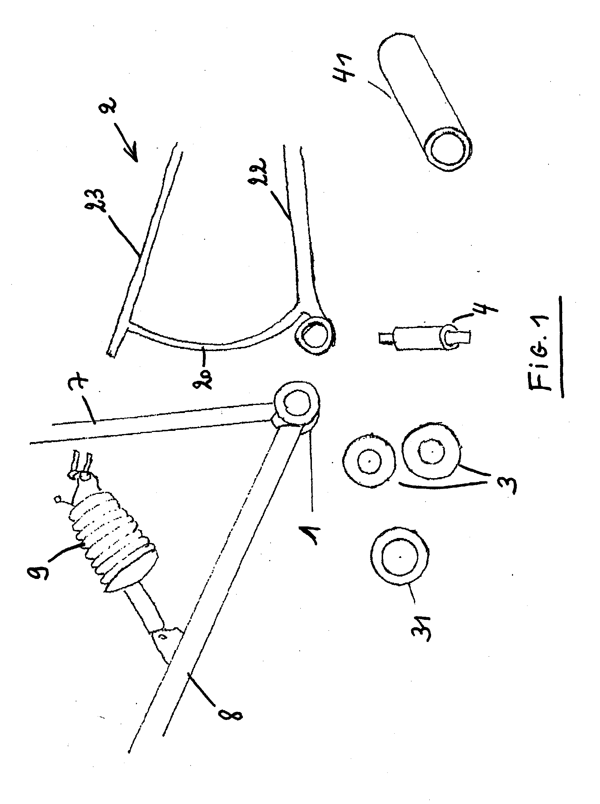

Selon la présente invention représentée sur la figure 1, on utilise une suspension arrière à bras oscillant 2 relié, de manière rigide ou pivotante, à une première extrémité d'un amortisseur 9, dont l'autre extrémité est reliée de manière rigide au cadre, par exemple au tube de selle 7 ou au tube diagonal 8. Le bras oscillant 2 comprend deux haubans 23, deux bases de suspension 22 et éventuellement deux renforts 20. Il peut donc être du type triangle de suspension arrière.

Le bras oscillant 2 s'articule par ailleurs de manière pivotante dans le plan médian du cadre au moyen d'un pivot unique situé dans la région du pédalier.

L'originalité de la présente demande est que l'axe du pivot est identique à l'axe du cylindre de roulement 4 du pédalier. Il n'y a donc pas de système de pivot à excentrique ou de pivots et biellettes supplémentaires, ce qui simplifie considérablement la cinématique.

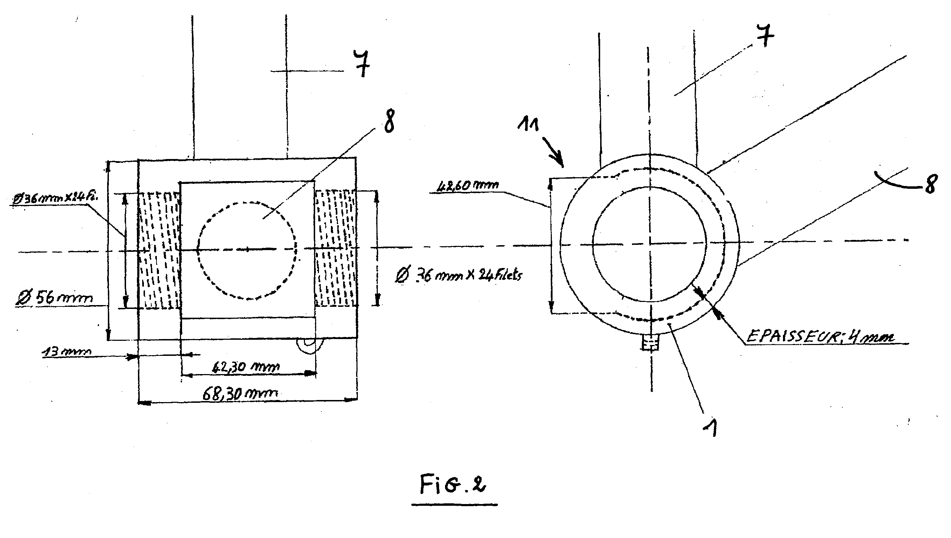

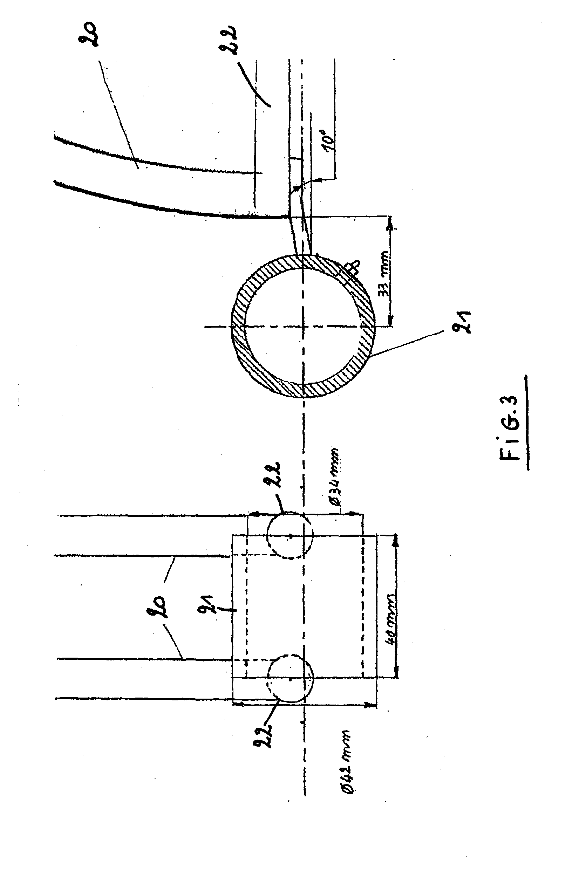

Comme représenté sur les figures 2 et 3, une bride du bras oscillant 21 vient s'articuler très simplement entre la surface externe de la buselure 41 de (boîtier de) roulement 4 et la surface interne du tube de pédalier 1, ces deux surfaces étant cylindriques, de même axe. Le contact de la bride 21 avec la buselure 41 est assuré par une bague de friction 31. Indépendamment de la rotation du pédalier, les bases peuvent donc décrire un arc de cercle lors du débattement. De plus, la distance selle-pédalier reste constante.

L'articulation de la bride 21 du bras oscillant 2 sur le roulement de pédalier 4 est rendue possible grâce à une ouverture 11 pratiquée sur environ la moitié de la surface latérale externe du cylindre constitué par le tube de pédalier 1.

Par construction, la longueur du rayon décrit par les bases ne varie pas, la longueur effective est déterminée par la distance entre l'axe de roulement du pédalier et l'axe de la roue arrière (moyeu). De ce fait, la chaîne de transmission garde toujours la même tension, quel que soit son travail.

De plus, on ne perçoit plus de vibrations au niveau du pédalier liées à la présence de pivots et biellettes additionnels. On ne perçoit plus non plus le déplacement du pédalier par rapport aux deux bases, au tube vertical et au tube oblique, dans le travail effectué par les deux bases de suspension.

La réduction du nombre de pièces mécaniques intervenant dans la suspension est bénéfique, non seulement en terme de poids, mais encore en terme de rigidité.

Enfin, il y a découplage entre le travail de la suspension et le pédalage ou le freinage. En particulier, l'effort de pédalage n'induit plus nécessairement le pompage ou l'écrasement.

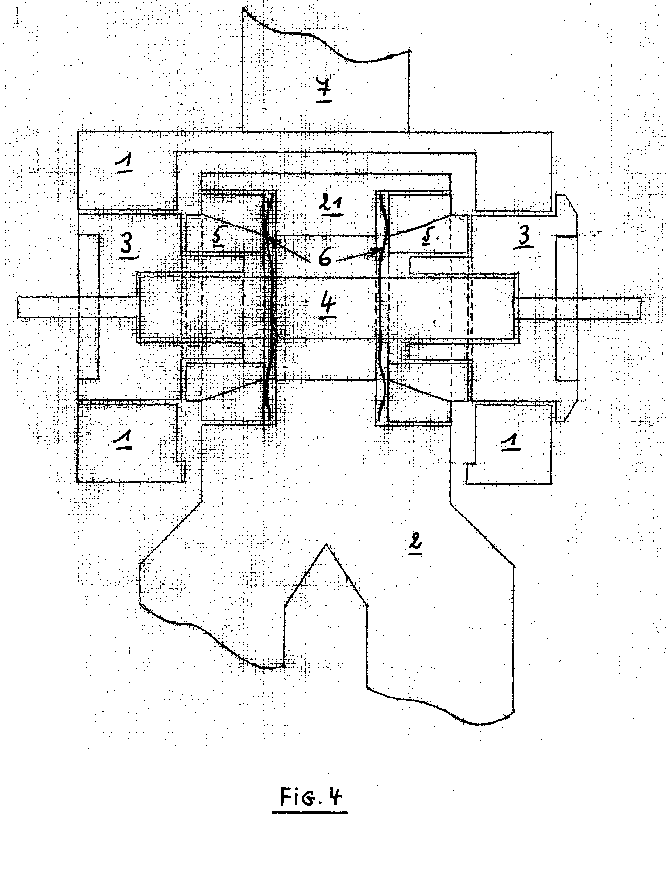

Selon une forme d'exécution préférée de l'invention représenté sur la figure 4, la bride 21 du bras oscillant 2 n'est plus directement en contact avec le roulement de pédalier 4. On interpose entre ces deux pièces, de chaque côté latéralement, une bague de roulement supplémentaire à rouleaux coniques 5. Celle-ci permet de diminuer considérablement le frottement entre la bride 21 et le roulement de pédalier 4. De plus, un rattrapage de jeu des roulements coniques selon l'axe du pédalier est réalisé par l'insertion axiale de rondelles élastiques 6.

## Revendications

1. Véhicule à deux roues, de préférence bicyclette de type VTT ou "mountain bike", comprenant un tube de pédalier (1) essentiellement cylindrique, solidaire d'un cadre rigide (7,8) et contenant un boîtier de roulement de pédalier (4), ainsi qu'un bras oscillant (2) pour le débattement, connecté de manière rigide d'une part au moyeu de la roue arrière et d'autre part, via un dispositif amortisseur (9) à un tube du cadre (7,8), ledit bras oscillant (2) étant également monté pivotant par rapport au cadre (7,8), **caractérisé en ce que** le bras oscillant (2) est pourvu à l'avant d'une bride (21) s'articulant sur le boîtier de roulement de pédalier (4), au travers d'une ouverture (11) pratiquée à l'arrière du tube de pédalier (1).

2. Véhicule selon la revendication 1, **caractérisé en ce que** le bras oscillant arrière (2) s'articule sur le boîtier de roulement du pédalier (4) par l'intermédiaire d'un roulement supplémentaire (5), capable de supporter une charge axiale élevée.

3. Véhicule selon la revendication 2, **caractérisé en ce que** le roulement supplémentaire (5) est disposé de chaque côté latéral de la bride (21) et s'appuie axialement sur un écrou de blocage (3) du roulement de pédalier (4).

4. Véhicule selon la revendication 2 ou 3, **caractérisé en ce que** le roulement supplémentaire (5) est du type à rouleaux coniques.

5. Véhicule selon la revendication 4, **caractérisé en ce qu'**une rondelle élastique de rattrapage de jeu (6), par exemple de type Belleville ou ondulée, est disposée axialement entre ledit roulement à rouleaux coniques (5) et ladite bride (21).

6. Véhicule selon l'une quelconque des revendications 1 à 5, **caractérisé en ce que** le contact entre la bride (21) et le roulement de pédalier (4) est assuré par l'intermédiaire d'une bague de friction (31).

7. Véhicule selon l'une quelconque des revendications 1 à 6, **caractérisé en ce qu'**une première extrémité du dispositif amortisseur (9) est fixée de manière rigide au tube diagonal (8) du cadre et l'autre extrémité est fixée de manière pivotante aux haubans (23) du bras oscillant (2) passant de chaque côté du tube de selle (7).

8. Véhicule selon l'une quelconque des revendications 1 à 6, **caractérisé en ce qu'**une première extrémité du dispositif amortisseur (9) est fixée de manière rigide au tube de selle (7).

9. Véhicule selon l'une quelconque des revendications précédentes, **caractérisé en ce que** le dispositif amortisseur (9) comprend un amortisseur à gaz, à huile ou un élastomère, ainsi qu'un ressort hélicoïdal.

10. Véhicule selon l'une quelconque des revendications précédentes, **caractérisé en ce que** le bras oscillant arrière (2) a essentiellement la forme d'un triangle.
